# EUROPÄISCHE PATENTSCHRIFT

(11) **EP 1 311 604 B1**
(45) Veröffentlichungstag und Bekanntmachung des Hinweises auf die Patenterteilung: **02.11.2005**
(21) Anmeldenummer: 01982201.4
(22) Anmeldetag: 03.08.2001
(51) Int. Cl.: C08K 5/138, C08K 5/00, C08L 9/02, C08L 23/16

(54) **ALTERUNGSSCHUTZMITTEL AUF BASIS VON PHENOLISCHEN SALZEN**
ANTIOXIDANT AGENT BASED ON PHENOLIC SALTS
AGENT ANTIVIEILLISEUR A BASE DE SELS PHENOLIQUES

(30) Priorität: 16.08.2000 DE 10039754
(43) Veröffentlichungstag der Anmeldung: 21.05.2003
(73) Patentinhaber: LANXESS Deutschland GmbH, 51369 Leverkusen (DE)
(72) Erfinder: ARNOLDI, Eric, 51375 Leverkusen (DE); BILLIGEN, Heinz-Peter, 41539 Dormagen (DE); HAGEMANN, Jörg, 51061 Köln (DE); WINKELBACH, Hans-Rafael, Brights Grove ON NON 1CO (CA); CAMPOMIZZI, Ezio, Sarnia, Ontario N7X 1H5 (CA); BENDER, Harald, 50259 Köln (DE)
(86) Internationale Anmeldenummer: PCT/EP2001/008996
(87) Internationale Veröffentlichungsnummer: WO 2002/014419

(56) Entgegenhaltungen:
- EP-A- 0 206 413
- WO-A-95/02639
- US-A- 3 243 411
- US-A- 3 723 489
- US-A- 3 906 055
- US-A- 5 643 985

## Beschreibung

Die Erfindung betrifft Alterungsschutzmittel für organische Polymere auf Basis von Salzen sterisch gehinderter phenolischer Verbindungen mit mindestens zwei phenolischen OH-Gruppen.

Es ist bekannt, organische Polymere, insbesondere Kautschukvulkanisate, gegen schädigende äußere Einflüsse durch Alterungsschutzmittel bzw. Antidegradantien zu schützen. Die Alterung bei den organischen Polymeren bzw. Kautschukvulkanisaten kann sich auf sehr verschiedende Weise bemerkbar machen, beispielsweise durch Verhärten und Verspröden der Polymere, durch deren Erweichung, durch den Verlust der elastischen Eigenschaften und Festigkeitseigenschaften, durch Rissbildung, Veränderung der Oberfläche oder durch sonstige Eigenschaftsänderungen, wie der elektrischen Eigenschaften, oder das Auftreten von unangenehmen Gerüchen. Für die genannten Veränderungen sind verschiedene Alterungsvorgänge verantwortlich, die beispielsweise im Handbuch für die Gummi-Industrie, 2. völlig neu bearbeitete Ausgabe, 1991, Seite 423 ff (Herausgeber: Bayer AG, Geschäftsbereich Kautschuk, Anwendungstechnik) beschrieben sind.

Um die erwähnten Alterungsprozesse bei den Polymeren, insbesondere bei den Kautschukelastomere, zu verhindern, ist es bekannt - wie erwähnt - Alterungsschutzmittel zuzusetzen, die sich praktisch in drei verschiedene Verbindungsklassen gliedern: den mono- oder oligofunktionellen sekundären aromatischen Aminen, den mono- oder oligofunktionelle substituierten Phenolen oder den heterocyclischen Mercapto(-SH)-Verbindungen.

Die bekannten Alterungsschutzmittel sind jedoch noch verbesserungswürdig, insbesondere was deren Alterungsschutzwirkung an betrifft, besonders bei hochtemperaturbelastenden Polymeren, insbesondere bei den Kautschukvulkanisaten. Es ist festzustellen, dass die bekannten Alterungsschutzmittel in ihrer Wirkung deutlich nachlassen, wenn die zu schützenden Polymeren höheren Temperaturen ausgesetzt sind. Darüber hinaus ist es wünschenswert, dass die einzusetzenden Alterungsschutzmittel beispielsweise beim Einsatz in Kautschukvulkanisaten nicht verfärbend sind und in Kautschukmischungen zusammen mit Peroxid- oder Schwefelvemetzern verwendet werden können.

Es wurde nun gefunden, dass Alterungsschutzmittel auf Basis von Salzen von sterisch gehinderten phenolischen Verbindungen mit mindestens zwei phenolischen OH-Gruppen eine deutliche Steigerung der Alterungsbeständigkeit von organischen Polymeren, insbesondere von Kautschukelastomeren, bewirken, ohne das sie die zu schützenden Polymeren verfärben oder mit Peroxid- oder Schwefelvemetzern merkbar reagieren.

Gegenstand der vorliegenden Erfindung sind daher Alterungsschutzmittel für organische Polymere auf Basis von Salzen von sterisch gehinderten phenolischen Verbindungen mit mindestens zwei phenolischen OH-Gruppen, die durch Umsetzung von basischen Metallsalzen und den den phenolischen Salzen zugrundeliegenden phenolischen Verbindungen erhalten werden.

In einer bevorzugten Ausführungsform der Erfindung werden die basischen Salze in unterstöchiometrischen Mengen, bezogen auf die phenolischen Verbindungen, eingesetzt.

Es werden dabei die basischen Metallsalze mit den phenolischen Verbindungen in einer solchen Menge umgesetzt, dass 5 bis 95 %, bevorzugt 10 bis 90 %, besonders bevorzugt, 30 bis 70 %, insbesondere 40 bis 60 % der phenolischen OH-Gruppen umgesetzt werden.

Als basische Metallsalze kommen beispielsweise in Betracht: die Oxide, Hydroxide, Alkoholate, Carbonate, Bicarbonate und/oder Hydride der Metalle der Ia-, IIa-, IIIa-Gruppe des Periodensystems der Elemente (Mendelejew), bevorzugt jedoch die Metalle aus der Alkali- und/oder Erdalkaligruppe. Als Metalle sind beispielsweise zu nennen: Zink, Natrium, Kalium, Magnesium sowie Kalzium, bevorzugt Natrium, Kalium und Kalzium.

Ganz besonders bevorzugt ist der Einsatz von Natriumhydroxid, Kaliumhydroxid, Kalziumhydroxid, Kalziumhydrid, Natriummethanolat, Natriumethanolat, Natriumcarbonat und/oder Kaliumcarbonat als basische Metallverbindungen.

Als sterisch gehinderte phenolische Verbindungen mit mindestens zwei phenolischen OH-Gruppen kommen erfindungsgemäß solche phenolischen Verbindungen in Betracht, die in der Lage sind, bei der Salzbildung elektronisch stabilisierte Salzstrukturen mit dem Phenolkörper auszubilden, d.h. eine gleichmäßige Verteilung der negativen Ladung über Resonanzstrukturen zu gewährleisten.

Beispielsweise können sterisch gehinderte phenolische Verbindungen der nachfolgend aufgelisteten allgemeinen Formeln zur Salzbildung eingesetzt werden: 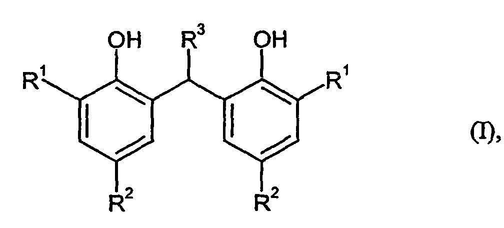 wobei
- R¹, R² und R³: gleich oder verschieden sein können und
- R¹, R²: für einen C₁-C₁₂-Alkylrest oder C₅-C₈-Cycloalkylrest, der gegebenenfalls durch C₁-C₁₂-Alkylgruppen substituiert sein kann, stehen
und
- R³: für Wasserstoff oder einen C₁-C₈-Alkyhest oder C₅-C₆-Cycloalkylrest steht,
sowie 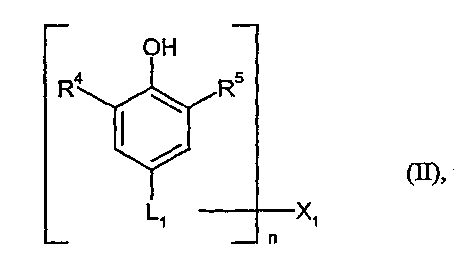 wobei
- R⁴ und R⁵: die Bedeutung des Restes R¹ der Formel (I) besitzen,
- L₁: für einen C₂-C₁₂-Alkylenrest steht, der durch bzw. der mit 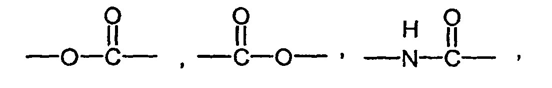 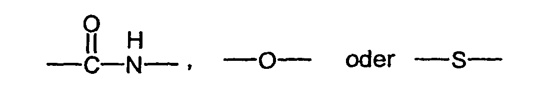 unterbrochen bzw. endständig substituiert sein kann,
- X₁: für -C(H)₄₋ₙ- oder im Falle von n = 2 auch für -O- oder -S- steht
und
- n: für 2, 3 oder 4 steht.

Beispiele für erfindungsgemäß einsetzbare Phenole sind formelmäßig wie folgt wiedergegeben:

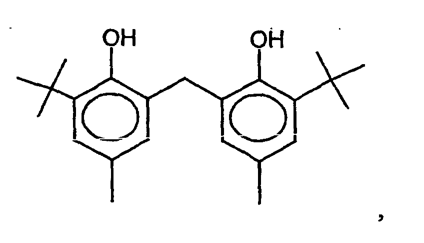

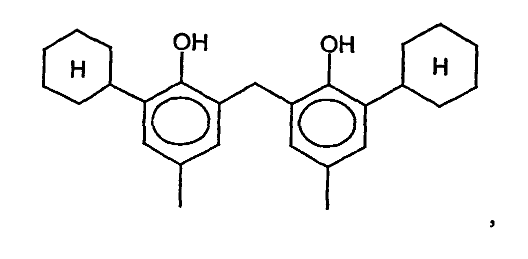

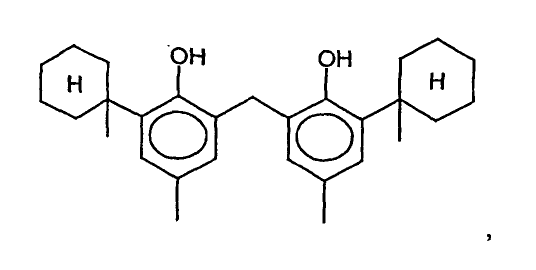

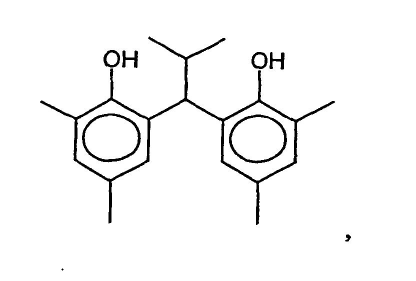

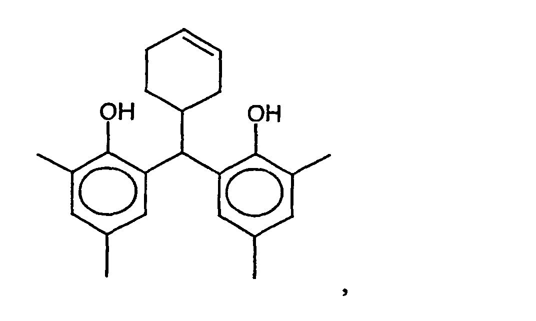

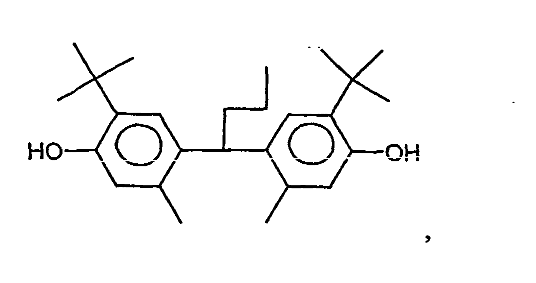

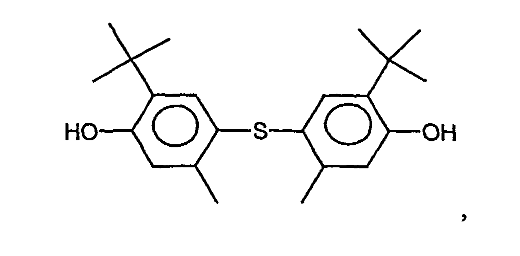

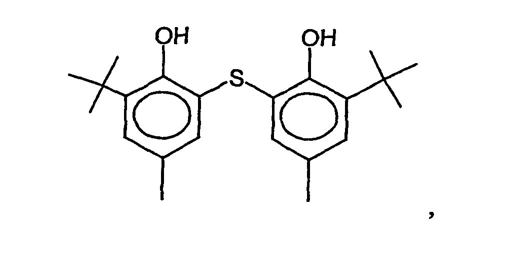

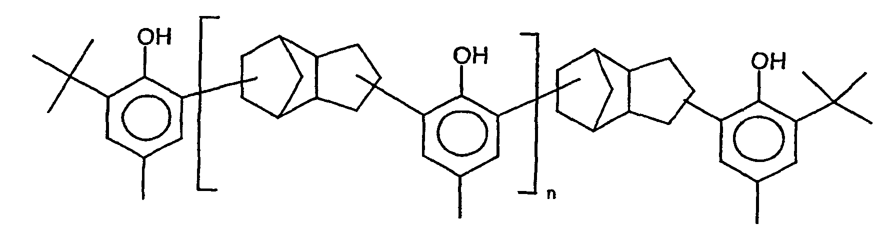

Gemisch aus Verbindungen mit n = 0, 1, 2, 3 und 4, 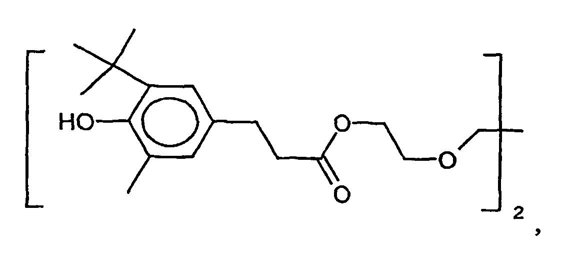 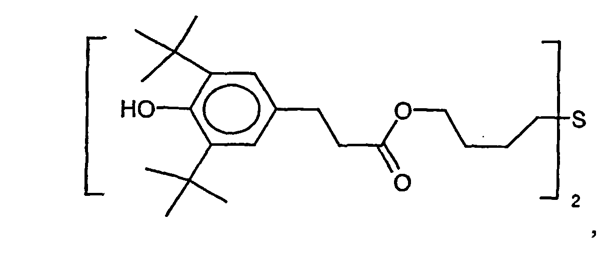 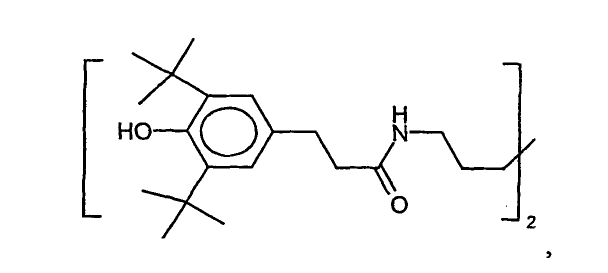 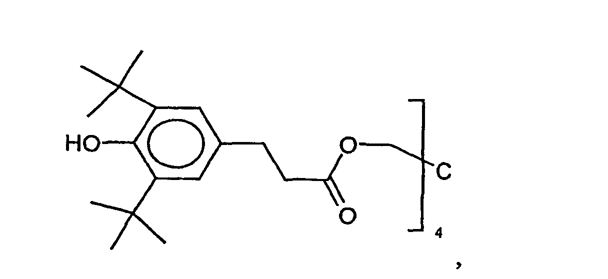 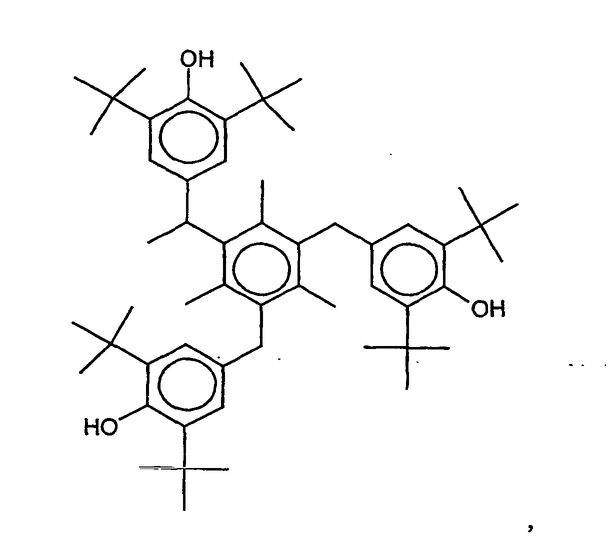 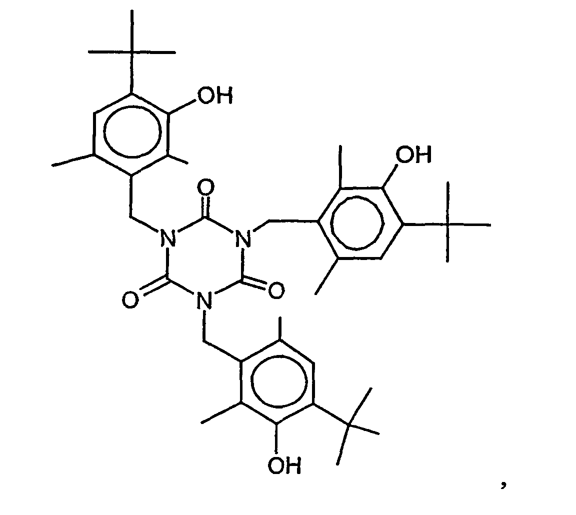 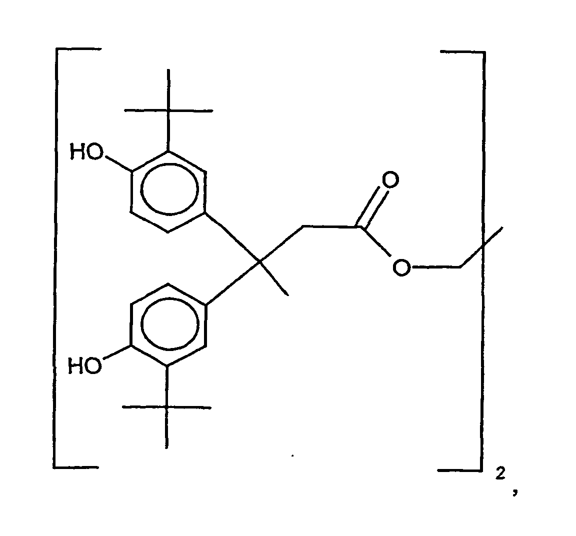 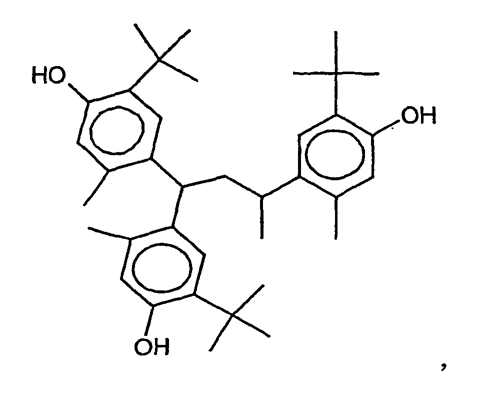 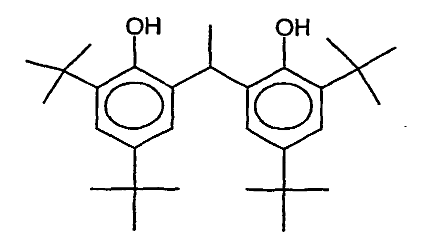 sowie

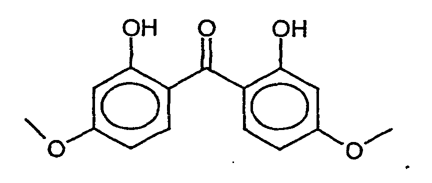

Besonders bevorzugt werden als phenolische Verbindungen eingesetzt:
2,2'-Methylen-bis-(4-methyl-6-alkyl-phenole) sowie 2,2'-Methylen-bis-(4-methyl-6-cycloalkyl-phenole). Insbesondere werden eingesetzt: 2,2'-Methylen-bis-(4-methyl-6-tert.-butylphenol) sowie 2,2'-Methylen-bis-(4-methyl-6-cyclohexylphenol).

Durch den Einsatz von unterstöchiometrischen Mengen an basischen Salzen werden bei der Umsetzung der genannten phenolischen Verbindungen Salze erhalten, die noch über einen entsprechenden Anteil an freiem Wasserstoff aus den phenolischen OH-Gruppen verfügen.

Die Umsetzung der genannten basischen Metallsalze mit den genannten phenolischen Verbindungen wird üblicherweise so durchgeführt, dass man das Phenol in einem organischen Lösungsmittel, z.B. einem Alkohol, wie Methanol oder Ethanol, löst und unter Rühren die basischen Metallsalze oder eine Lösung derselben in dem o.g. Lösungsmittel langsam zugibt. Danach wird das Lösungsmittel im Vakuum unter leichter Erwärmung abdestilliert.

Die Temperaturen bei der Umsetzung liegen im Bereich von -20 bis 100°C, bevorzugt 0 bis 80°C und besonders bevorzugt von 20 bis 60°C.

Insbesondere werden die basischen Metallsalze mit den phenolischen Verbindungen so umgesetzt, dass man direkt das Salz der phenolischen Verbindung durch eine Neutralisationsreaktion des basischen Metallsalzes mit den sauren Protonen der Phenolverbindung erhält.

Da die erhaltenen Salze der sterisch gehinderten phenolischen Verbindungen häufig empfindlich gegen Luftsauerstoff, Feuchtigkeit sowie Licht sind, ist es empfehlenswert Feuchtigkeit sowie Luftsauerstoff bzw. Licht von den erhaltenen Salzen durch geeignete Maßnahmen, wie Inertisierung unter Stickstoff, fernzuhalten.

Aufgrund der empfindlichen Handhabung der erfindungsgemäßen phenolischen Salze ist es darüber hinaus empfehlenswert, die phenolischen Salze unmittelbar nach deren Herstellung in die zu schützenden Polymere bzw. Elastomere einzuarbeiten oder entsprechende Masterbatches herzustellen, die dann als solche in die zu schützenden organischen Polymere eingearbeitet werden können.

Üblicherweise beträgt die Konzentration der erfindungsgemäßen phenolischen Salzen in Mischungen 0,01 bis 10 Gew.-%, bevorzugt 0,05 bis 5 Gew.-%, bezogen auf den organischen Polymeranteil.

Eine weitere Zubereitung besteht in der direkten Reaktion des Phenols mit der Oberfläche eines unlöslichen Metallsalzes unter erhöhtem Druck bis 200 bar und Temperaturen von 20 bis 200°C. Die dabei erhaltenen Salze der sterisch gehinderten, phenolischen Verbindungen zeigen sich unempfindlich gegen Luftsauerstoff, Feuchtigkeit und Licht und sind damit länger stabil und verarbeitbar.

Selbstverständlich ist es möglich, die erfindungsgemäßen Alterungsschutzmittel auf Basis der Salze von sterisch gehinderten phenolischen Verbindungen mit anderen, bekannten Alterungsschutzmittel abzumischen, wenn dies gewünscht ist. Als Alterungsschutzmittel kommen dabei z.B. solche in Betracht, wie sie im Lexikon der Kautschuk-Technik, 2. überarbeitete Auflage, Hüttig-Buch-Verlag, Heidelberg, beschrieben sind. Geeignet sind insbesondere p-Phenyldiamin-Derivate und Diphenylamine.

Die Menge der zuzusetzenden bekannten Alterungsschutzmittel kann leicht durch entsprechende Vorversuche ermittelt werden und richtet sich u.a. nach dem Einsatzzweck der zu schützenden organischen Polymere.

Die erfindungsgemäßen Alterungsschutzmittel eignen sich - wie erwähnt - insbesondere für den Einsatz bei Kautschukvulkanisaten, wobei Kautschuke auf Basis von Acrylnitrilcopolymeren sowie Ethylenpropylendiencopolymeren bevorzugt sind. Selbstverständlich können die erfindungsgemäßen Alterungsschutzmittel - z.B. bei der Verwendung in Elastomeren - zusammen mit den dafür bekannten Kautschukhilfs- und Vulkanisationsmittel eingesetzt werden. Als solche Kautschukhilfsmittel und Vulkanisationsmittel sind beispielsweise zu nennen: Vulkanisationsbeschleuniger und Vulkanisationsverzögerer, Metalloxide, Schwefel, peroxidische Verbindungen sowie Füllstoffe.

Es ist überraschend, dass eine deutliche Verbesserung der Alterungsbeständigkeit, beispielsweise bei Kautschukvulkanisaten zu beobachten war, wenn Salze von sterisch gehinderten, phenolischen Verbindungen eingesetzt wurden, die mindestens zwei phenolische OH-Gruppen besaßen. Darüber hinaus zeigten solche phenolische Verbindungen eine deutliche Steigerung der Alterungsbeständigkeit besonders bei Kautschukvulkanisaten, wenn die phenolischen Verbindungen in der Lage waren, die negative Ladung - wie erwähnt - über Resonanzstrukturen zu stabilisieren.

### Beispiele

### Herstellung des Natriumsalzes von Bis(3-tert.-butyl-2-hydroxy-5-methylphenyl)methylen (1)

300 g absolutes Methanol werden vorgelegt und durch Anlegen von Vakuum und Belüften mit Stickstoff von Sauerstoff befreit. 170 g Bis(3-tert.-butyl-2-hydroxy-5-methylphenyl)methylen werden im Methanol gelöst. Bei RT werden innerhalb einer Stunde 90 g einer 30 %igen Natriummethylat-Lösung in Methanol zugetropft. Man lässt eine Stunde nachrühren und rotiert das Lösungsmittel bei max. 40°C vollständig ab. Es werden 180 g von (1) als gräulich beiger Feststoff erhalten.

### Herstellung des Calciumsalzes von Bis(3-tert.-butyl-2-hydroxy-5-methylphenyl)methylen (2)

200 g absolutes Methanol werden vorgelegt und durch Anlegen von Vakuum und Belüften mit Stickstoff von Sauerstoff befreit. Es werden 10,5 g Calciumhydrid-Pulver zugegeben und für ca. 30 min zum Rückfluss erhitzt. Bei RT werden dann unter Rühren 85 g Bis(3-tert.-butyl-2-hydroxy-5-methylphenyl)methylen portionsweise zugegeben. Die Suspension wird eine Stunde nachgerührt und der Feststoff abfiltriert. Man erhält 93 g von (2) als grünlich beigen Feststoff.

### Herstellung des Natriumsalzes von Bis(3-tert.-butyl-2-hydroxy-5-methylphenyl)methylen direkt auf Natrium Carbonat durch eine Feststoffreaktion unter erhöhtem Druck und Temperatur (3)

Für den Versuch wurde eine ASE (Accelerated Solvent Extraction) Einheit der Firma Dionex verwendet. In einer 11 ml Extraktionszelle wird 1 g Na-Carbonat (feinpulvrig gemahlen) gefüllt. Bis(3-tert.-butyl-2-hydroxy-5-methylphenyl)methylen wird in n-Hexan bis zur Sättigung gelöst (n-Hexan Lösung über Feststoff) und die Lösung abfiltriert. Die Zelle wird auf eine Temperatur von 150°C gebracht und 18 ml der oben erwähnten, gesättigten Lösung mit einem Überdruck von 50 bar für 10 min in die Zelle über das Na-Carbonat geleitet. Die Zelle wird mit Stickstoff freigespült und abgekühlt. Man erhält 1,2 g von (3) als beigen Feststoff.

Für die Beurteilung der erfindungsgemäßen Alterungsschutzmittel wurden diese in entsprechende Kautschukmischungen eingearbeitet und daraus dünne Filme für Infrarot Messungen gegossen. Im Heißluftofen wurde bei Temperaturen von 150°C die Mischung einem Alterungsprozess unterworfen und mittels Infrarot-Spektroskopie auf entstandene Oxidationsprodukte hin untersucht. Es wurden nicht einzelne Oxidationsprodukte untersucht, sondern die Absorption im Infraroten bei der Wellenzahl 1714 cm⁻¹ als repräsentativ für Kohlenstoff-Sauerstoff-Verbindungen herangezogen. Dazu wurde an der oben genannten Wellenzahl die Absorption aufgenommen und gegen eine Referenzwellenlänge, die keiner Beeinflussung durch oxidierte Produkte unterliegt, normalisiert. Für Styrol-Butadien Kautschuke wurde z.B. als Referenz die Absorption bei 1493 cm-1 herangezogen. Dieser normalisierte Wert wurde als Oxidationsgrad ausgewertet. Für die einzelnen Polymere wurden charakteristische Oxidationsgrade als Grenzen festgelegt und die Zeit im Heißluftofen bis zum Erreichen dieses Oxidationsgrades gemessen.

Für die vereinfachten Experimente im Heißlunofen unter Infrarot-Auswertung wurden vereinfachte Kautschukmischungen verwendet. Dabei wurde jeweils ein Grenzwert für die Oxidation als Verhältnis der Absorption der Oxidationsprodukte bei 1714 cm-1 zu dem internen Standard festgesetzt. Die eingesetzten Kautschukmischungen bestanden aus einer Mischung von Elastomer, einem Peroxid und dem zu untersuchenden Alterungsschutzmittel.

Für die Versuche mit hydriertem Acrylnitril-Butadien Kautschuk wurde ein Polymer mit einem Acrylnitril-Gehalt von 34 % gewählt. Es wurde Therban A3407 der Fa. Bayer AG aus dem Handel verwendet. Die Mischung besteht im einzelnen aus

| | |
|---|---|
| Therban A3407 | 100 phr |
| p-Methylhydroperoxid | 6,5 phr |

verschiedene Alterungsschutzmittel in konstanten Anteilen

Mit diesen Mischungen wurden Alterungen bis zum Oxidations-Verhältnis 0,2 geführt. Je länger die Mischungen bis zu diesem Zeitpunkt durchhalten, desto besser ist der Alterungsschutz.

| Zusatz | Alterung bei 150°C in Stunden |
|---|---|
| Keinen Zusatz | 102 |
| 2,2'-Methylen-bis-(4-methyl-6-tert.-butylphenol) (BPH) | 571 |
| Natriumsalz von Bis(3-tert.-butyl-2-hydroxy-5-methylphenyl)methylen | 1033 |
| 2,2'-Methylen-bis-(4-methyl-6-tert.-butylphenol) (BPH) + 2phr CaCO3 | 1360 |
| Natrimnsalz von Bis(3-tert.-butyl-2-hydroacy-5-methylphenyl)methylen auf Na2CO3 | 1896 |

Bei einer weiteren Alterung bis zum Oxidationsverhältnis von 0,4 ergeben sich folgende Resultate

| Zusatz | Alterung bei 150°C in Stunden |
|---|---|
| Keinen Zusatz | 145 |
| 2,2'-Methylen-bis-(4-methyl-6-tert.-butylphenol) (BPH) | 764 |
| Natriumsalz von Bis(3-tert-butyl-2-hydroxy-5-methylphenyl)methylen | 1150 |
| 2,2'-Methylen-bis-(4-methyl-6-tert.-butylphenol) (BPH) + 2phr CaCO3 | 1440 |
| Natriumsalz von Bis(3-tert.-butyl-2-hydroxy-5-methylphenyl)methylen auf Na2CO3 | 2442 |

Am schnellsten altern wie erwartet die unstabilisierten Proben. An zweiter Stelle steht die Mischung mit der nach Stand der Technik ausgerüsteten Mischung mit dem handelsublichen Alterungsschutzmittel BPH. Unerwartet zeigen die hergestellten Salze der Phenole signifikant verlängerte Standzeiten. Die Verlangsamung der Alterung wird besonders deutlich bei längeren Alterungen. Hier im Falle der Alterung bis zum Oxidationsverhältnis von 0,4 ergibt sich überraschenderweise eine Verlangsamung der Alterung um einen Faktor drei.

Für die Versuche mit Acrylnitril-Butadien Kautschuk wurde ein Polymer mit einem Acrylnitril-Gehalt von 18 % gewählt. Es wurde Perbunan NT 1845 der Fa. Bayer AG aus dem Handel verwendet. Die Mischung besteht im einzelnen aus

| | |
|---|---|
| Perbunan NT 1845 | 100 phr |
| p-Methylhydroperoxid Alterungsschutzmittel | 6,5 phr |

Mit diesen Mischungen wurden Alterungen bis zum Oxidations-Verhältnis 1,0 geführt. Je länger die Mischungen bis zu diesem Zeitpunkt durchhalten, desto besser ist der Alterungsschutz.

| Zusatz | Alterung bei 150 °C in Stunden |
|---|---|
| Kein Zusatz | 247 |
| Natriumsalz von Bis(3-tert.-butyl-2-hydroxy-5-methylphenyl)methylen auf Na2CO3 | 317 |

Unerwartet zeigt die Mischung, die mit dem hergestellten Salz des Phenols versetzt wurde, eine signifikant verlängerte Standzeit.

Für die Versuche mit Vinyl-Butadien-Styrol Kautschuk wurde ein Polymer mit einem Styrol-Gehalt von 25% gewählt. Es wurde Buna VSL 2525 der Fa. Bayer AG verwendet. Die Mischung besteht im einzelnen aus

| | |
|---|---|
| Buna VSL 2525 | 100 phr |
| p-Methylhydroperoxid Alterungsschutzmittel | 6,5 phr |

Mit diesen Mischungen wurden Alterungen bis zum Oxidations-Verhältnis 0,9 geführt. Je länger die Mischungen bis zu diesem Zeitpunkt durchhalten, desto besser ist der Alterungsschutz.

| Zusatz | Alterung bei 150 °C in Stunden |
|---|---|
| Kein Zusatz | 62 |
| Natriumsalz von Bis(3-tert.-butyl-2-hydroxy-5-methylphenyl)methylen auf Na2CO3 | 290 |

Unerwartet zeigt die Mischung, die mit dem hergestellten Salz des Phenols versetzt wurde, eine signifikant verlängerte Standzeit.

## Patentansprüche

1. Verwendung von Salzen von sterisch gehinderten phenolischen Verbindungen mit mindestens zwei phenolischen OH-Gruppen, die durch Umsetzung von basischen Metallsalzen und den den phenolischen Salzen zugrundeliegenden phenolischen Verbindungen erhalten werden, als Alterungsschutzmittel für organische Polymere.

2. Verwendung nach Anspruch 1, **dadurch gekennzeichnet, dass** als basische Metallsalze die Oxide, Hydroxide, Carbonate, Bicarbonate, Alkoholate und/oder Hydride der Metalle der Ia-, IIa-, IIIa-Gruppe des Periodensystems der Elemente eingesetzt werden.

3. Verwendung nach Anspruch 1, **dadurch gekennzeichnet, dass** als phenolische Verbindungen solche der Formeln (I) und (II) eingesetzt werden: 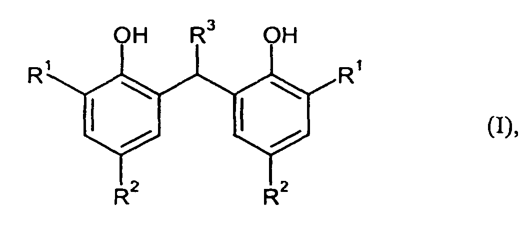 wobei
R¹, R² und R³ gleich oder verschieden sein können und
R¹, R² für einen C₁-C₁₂-Alkylrest oder C₅-C₈-Cycloalkylrest, der gegebenenfalls durch C₁-C₁₂-Alkylgruppen substituiert sein kann, stehen
und
R³ für einen Wasserstoff oder einen C₁-C₈-Alkylrest oder C₅-C₆-Cycloalkylrest steht
sowie 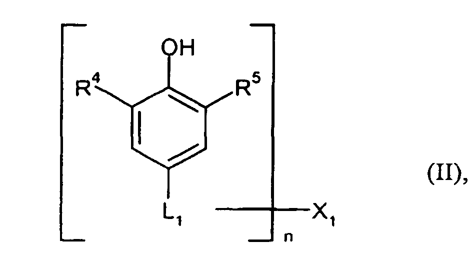 wobei
R⁴ und R⁵ die Bedeutung des Restes R¹ der Formel (I) besitzen,
L₁ für einen C₂-C₁₂-Alkylenrest steht, der durch bzw. der mit 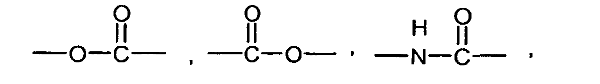 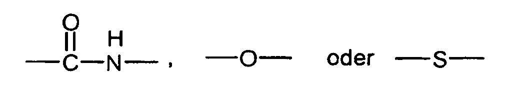 unterbrochen bzw. endständig substituiert sein kann,
X₁ für -C(H)₄₋ₙ- oder im Falle von n = 2 auch für -O- oder -S- steht
und
n für 2, 3 oder 4 steht.

4. Verwendung nach Anspruch 1, **dadurch gekennzeichnet, dass** 5 bis 95 % der phenolischen OH-Gruppen der eingesetzten phenolischen Verbindung mit den basischen Salzen umgesetzt worden sind.

## Claims

1. Use of salts of sterically hindered phenolic compounds with at least two phenolic OH groups, which are obtained by reaction of basic metal salts and the phenolic compounds underlying the phenolic salts, as anti-aging agents for organic polymers.

2. Use according to Claim 1, **characterized in that** the oxides, hydroxides, carbonates, bicarbonates, alcoholates and/or hydrides of the metals pertaining to Groups Ia, IIa, IIIa of the Periodic Table of the Elements are used as basic metal salts.

3. Use according to Claim 1, **characterized in that** phenolic compounds used are of formulae (I) and (II): 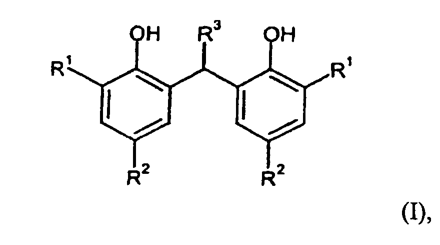 where
R¹, R² and R³ may be the same or different and
R¹, R² represent a C₁-C₁₂ alkyl radical or C₅-C₈ cycloalkyl radical which may optionally be substituted by C₁-C₁₂ alkyl groups,
and
R³ represents a hydrogen or a C₁-C₈ alkyl radical or C₅-C₆ cycloalkyl radical
and also 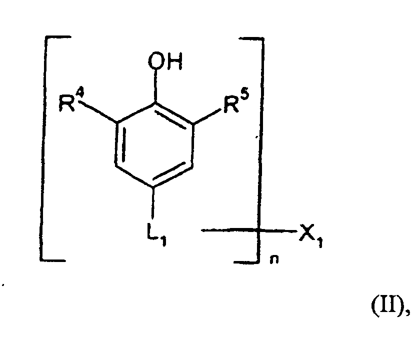 where
R⁴ and R⁵ have the signification of the radical R¹ of formula (I),
L₁ represents a C₂-C₁₂ alkylene radical which may be interrupted by or terminally substituted with 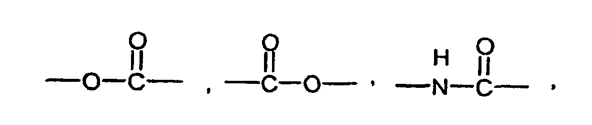 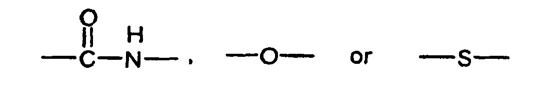
X₁ represents -C(H)₄₋ₙ- or, in the case of n = 2, also represents -O- or -S-
and
n represents 2, 3 or 4.

4. Use according to Claim 1, **characterized in that** 5 to 95% of the phenolic OH groups of the phenolic compound employed have been reacted with the basic salts.

## Revendications

1. Utilisation de sels de dérivés phénoliques objets d'un empêchement stérique et à au moins deux groupes OH phénoliques, obtenus par réaction de sels métalliques basiques et des dérivés phénoliques correspondants, en tant qu'agents de protection contre le vieillissement pour des polymères organiques.

2. Utilisation selon la revendication 1, **caractérisée en ce que** l'on utilise en tant que sels métalliques basiques les oxydes, hydroxydes, carbonates, bicarbonates, alcoolates et/ou hydrures des métaux des groupes Ia, IIa, IIIa de la Classification Périodique des éléments.

3. Utilisation selon la revendication 1, **caractérisée en ce que** l'on met en oeuvre des dérivés phénoliques répondant aux formules I et II, à savoir : 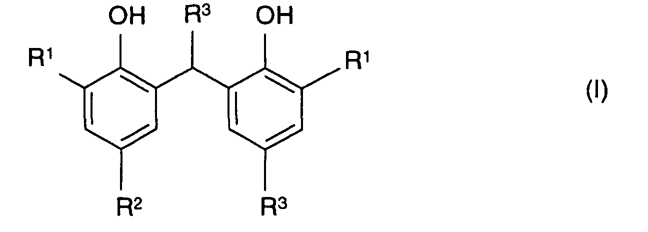 dans laquelle
R¹, R² et R³ peuvent avoir des significations identiques ou différentes et
R¹, R² représentent chacun un groupe alkyle en C₁-C₁₂ ou cycloalkyle en C₅-C₈ qui peut le cas échéant être substitué par des groupes alkyles en C₁-C₁₂,
et R³ représente l'hydrogène ou un groupe alkyle en C₁-C₈ ou cycloalkyle en C₅-C₆, 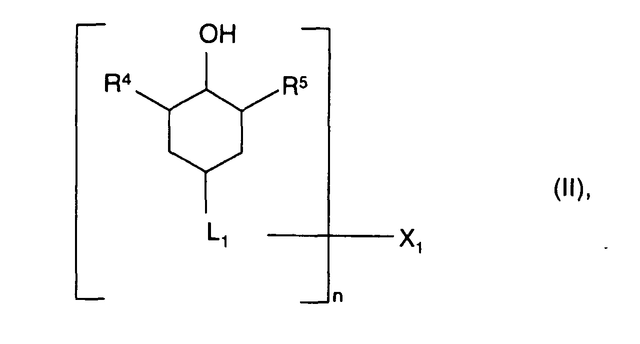 dans laquelle
R⁴ et R⁵ ont les significations indiquées pour R¹ en référence à la formule (I),
L₁ représente un groupe alkylène en C₂-C₁₂ qui peut être interrompu ou substitué en position terminale par 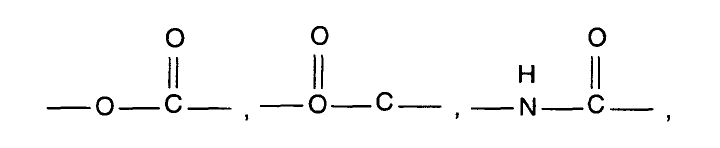 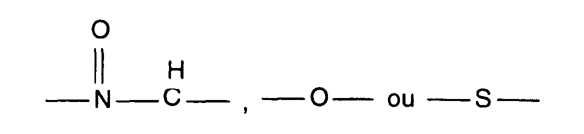
X₁ représente -C(H)₄₋ₙ- ou bien encore, lorsque n = 2, -O- ou -S- et
n est égal à 2, 3 ou 4.

4. Utilisation selon la revendication 1, **caractérisée en ce que** l'on fait réagir de 5 à 95 % des groupes OH phénoliques du dérivé phénolique mis en oeuvre avec les sels basiques.
